Europäisches Patentamt

European Patent Office

Office européen des brevets

(11) Veröffentlichungsnummer: **0 434 143 A2**

# (12) EUROPÄISCHE PATENTANMELDUNG

(21) Anmeldenummer: 90203314.1

(22) Anmeldetag: 13.12.90

(51) Int. Cl.⁵: **G11B 15/675**, G11B 15/07, G11B 23/087

Ein Antrag gemäss Regel 88 EPÜ auf korrekte Numerierung der Patentansprüche 1-14 liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: 18.12.89 NL 8903088
14.02.90 NL 9000348
18.10.90 DE 4033095

(43) Veröffentlichungstag der Anmeldung:
26.06.91 Patentblatt 91/26

(84) Benannte Vertragsstaaten:
AT BE CH DE DK ES FR GB GR IT LI LU NL SE

(71) Anmelder: **Philips Patentverwaltung GmbH
Wendenstrasse 35 Postfach 10 51 49
W-2000 Hamburg 1(DE)**

(84) **DE**

Anmelder: **N.V. Philips' Gloeilampenfabrieken
Groenewoudseweg 1
NL-5621 BA Eindhoven(NL)**

(84) **BE CH DK ES FR GB GR IT LI LU NL SE AT**

(72) Erfinder: **Vollmann, Norbert Christian
De Vleeshouwer 7
NL-5506 EN Veldhoven(NL)**
Erfinder: **Weber, Georg
Hauptstrasse 33
W-3554 Lohra(DE)**
Erfinder: **Scholz, Thomas
Mayenhof 1
W-6296 Winkels(DE)**

(74) Vertreter: **Kupfermann, Fritz-Joachim,
Dipl.-Ing. et al
Philips Patentverwaltung GmbH
Wendenstrasse 35 Postfach 10 51 49
W-2000 Hamburg 1(DE)**

(54) **Anordnung, bestehend aus einem Magnetbandkassettengerät mit einem Laufwerk und Lademechanismus für Magnetbandkassetten und aus einer Magnetbandkassette.**

(57) Anordnung, bestehend aus einem Magnetbandkassettengerät mit einem Laufwerk und Lademechanismus (27) für Magnetbandkassetten und aus einer Magnetbandkassette (3, 13), die mit Vertiefungen (6) versehen ist, in die jeweils ein Mitnehmer (32) des Lademechanismus (27) zum Handhaben weiterer Lade- und Entladefunktionen eingreifen kann, wobei zum Handhaben von Magnetbandkassettentypen (3, 13) mit unterschiedlichen Bandspiel-Normen und Gehäusegestaltungen für jeden Magnetbandkassettentyp mit seiner speziell ausgebildeten Vertiefung (6, 21) ein spezieller Mitnehmer (32, 33) des Lademechanismus (27) versehen ist.

# ANORDNUNG, BESTEHEND AUS EINEM MAGNETBANDKASSETTENGERÄT MIT EINEM LAUFWERK UND LADEMECHANISMUS FÜR MAGNETBANDKASSETTEN UND AUS EINER MAGNETBANDKASSETTE

Die Erfindung bezieht sich auf eine Anordnung, bestehend aus mit einem Magnetbandkassettengerät mit einem Laufwerk und Lademechanismus für Magnetbandkassetten und aus einer Magnetbandkassette, die mit Vertiefungen versehen ist, in die jeweils ein Mitnehmer des Lademechanismus zum Handhaben weiterer Lade- und Entladungsfunktion eingreifen kann.

Eine derartige Anordnung aus funktionell miteinander zusammenwirkenden Magnetbandkassettengerät und Magnetbandkassette ist aus dem deutschen Patent P 37 19 890.4 (PHD 87-101) bekannt. Der Lademechanismus dieser Anordnung ist in dem deutschen Patent P 39 04 483.1 (PHD 89-019) beschrieben. Bei ihm ist ein Kassettenschacht in vertikaler Richtung aus einer Auswerfebene in eine Spielebene absenkbar ist. Der Kassettenschacht ist ausgelegt zum Abspielen von analog bespielten Magnetbandkassetten, die mit zwei Bandwickeln versehen sind, in die innerhalb des Gerätes Wickeldorne des Laufwerkes eingreifen. Das Magnetband wird in Längsrichtung an einem gegen das Band gedrückten, stillstehenden Magnetkopf vorbeigeführt. Es ist ein Mitnehmer vorgesehen, der beim von Hand Einschieben einer Kassette in das in Einschieberichtung vorn liegende Wickelloch einfallen kann. Dieser Mitnehmer zieht nach dem Aufstarten eines Einzugsmotors die Magnetbandkassette bis in die Spielposition weiter ein.

Neuerdings gibt es digital abspielbare Magnetbandkassetten, bei denen ein rotierender Magnetkopf das Magnetband abtastet. Die Abmessungen dieser digital abspielbaren Kassetten sind derart anders als die der analog abspielbaren Kassetten, daß für diese Kassetten ein völlig anderes Laufwerk eingesetzt werden muß.

Es ist Aufgabe der Erfindung, eine Anordnung der eingangs erwähnten Art mit einem Magnetbandkassettengerät, das herkömmlich analog bespielte Magnetbandkassettentypen abspielen kann, mit einer neuen Magnetbandkassette zu schaffen, mit der es möglich wird, die Magnetbandkassettentypen mit unterschiedlicher Bandspielnorm abzuspielen.

Die gestellte Aufgabe ist erfindungsgemäß dadurch gelöst, daß zum Handhaben von Magnetbandkassettentypen mit unterschiedlichen Bandspiel-Normen und Gehäusegestaltungen jedem Magnetbandkassettentyp mit seiner speziell ausgebildeten Vertiefung ein spezieller Mitnehmer des Lademechanismus zugeordnet ist.

Die Magnetbandkassetten der verschiedenen Typen werden damit jede auf ihre spezielle Weise behandelt.

Bei einer Anordnung, bei der die Magnetbandkassetten eines ersten Typs zwei planparallele Hauptwänden aufweisen, die je zwei als Wickellöcher ausgestattete Vertiefungen aufweisen, in die jeweils ein erster Mitnehmer des Lademechanismus eingreifen kann, ist nach einer weiteren Ausgestaltung der Erfindung vorgesehen, daß die Magnetbandkassetten mit einer unterschiedlichen Bandspielnorm Magnetbandkassetten eines zweiten Typs mit zwei parallelen Hauptwänden sind, wovon eine Hauptwand im wesentlichen geschlossen und mit einer weiteren, anders gelegenen Vertiefung versehen ist, und der Lademechanismus einen zweiten Mitnehmer umfaßt, der in die weitere Vertiefung eingreifen kann.

Nach einer weiteren Ausgetaltung der Erfindung ist vorgesehen, daß ein Mitnehmer einen Kassettentyp, gesteuert von Gehäuseteilen der Kassette dieses einen Typs, mittels eines Mitnehmers für eine Kassette des anderen Typs in die Vertiefung der Kassette dieses einen Typs zum Mitnehmer eindrückbar ist.

Es findet hierbei eine funktionelle Wechselwirkung, zwischen den Mitnehmern der Lademechanismus für einen Typ von Kassetten mit den Vertiefungen der Kassetten statt, wobei die Gestaltung des einen Kassettentyps das Eingreifen des Mitnehmers dieses Typs bestimmt.

Nach einer weiteren Ausgestaltung der Erfindung ist vorgesehen, daß bei einer Geräteauslegung auf zwei Typen von Magnetbandkassetten die zwei dafür eingesetzten Mitnehmer an den Enden eines sich in Einschubbewegungsrichtung erstreckenden Wippbalkens vorgesehen sind, dessen Wippwelle mittels eines vom Lademechanismus verstellbaren Zwischengliedes verschiebbar ist, wobei das Zwischenglied über die Wippwelle beim Einschieben einer Kassette den Wippbalken mit einzieht und bei deren Ausschieben mit ausschiebt und die Wippwelle beim Ausschieben auf eine Rampe aufläuft und sich von der Kassette entfernt. Mit dem Wippbalken läßt sich das Zusammenspiel von Vertiefungen in den Gehäusen der Magnetbandkassetten unterschiedliche Typen mit den ihnen zugeordneten Mitnehmern auf einfache Weise lösen, weil die unterschiedlichen Magnetbandkassettentypen ihre Vertiefungen an unterschiedlichen Stellungen haben. Durch das Hochlaufen des Wippbalkens am Ende einer Ausschiebebewegung entfernen sich die Mitnehmer soweit von der jeweils eingeschobenen Kassette, daß diese, ganz gleich um welchen Typ es sich handelt, zum Ausschieben freigegeben ist.

Nach einer weiteren Ausgestaltung der Erfindung ist vorgesehen, daß die den Wippbalken verschiebende Wippwelle den Wippbalken erst dann in die den Eingriff eines Mitnehmers in die zugehörige Vertiefung erlaubende Stellung absenkt, die einschiebende Kassette diese Stellung nahezu erreicht hat. Die Mitnehmer schleifen damit nur über eine kurze Weglänge über das Kassettengehäuse hinweg.

Nach einer weiteren Ausgestaltung der Erfindung ist vorgesehen, daß der in Einschubrichtung hinten gelegene erste Mitnehmer mit einer Vertiefung des ersten Kassettentyps in Form eines Wikkelloches und der in Einschubrichtung vorn gelegene zweite Mitnehmer mit einer Vertiefung des zweiten Kassettentyps in Form einer Nut am in Einschubrichtung vorn gelegenen Gehäuserand zusammenwirken. Es läuft also immer ein Mitnehmer auf eine Kassettenseitenwand auf und drückt den anderen Mitnehmer in die Vertiefung dieser Kassette. Die Ansteuerung der jeweiligen Vertiefung erfolgt also von ganz allein nur durch das Verschieben der Magnetbandkassette gegenüber dem Wippbalken. Sobald ein Mitnehmer in die ihm zugeordnete Vertiefung eingefallen ist, zieht ein Einzugsmotor die Magnetbandkassette über den Mitnehmer weiter in den Schacht des Lademechanismus ein.

Die analog abspielbare Magnetbandkassette ist an ihrer Vorderseite offen. In die Öffnungen können der Magnetkopf des Gerätes sowie Andruckrollen eingeschoben werden. Bei Nichtbenutzung dieser Kassette wird diese in einem Aufbewahrungsbehälter verwahrt. Man hat also üblicherweise bei jeder Kassette immer zwei Teile, nämlich die Kassette selbst und den Aufbewahrungsbehälter. Bei der digital abspielbaren Kassette wird auf den Aufbewahrungsbehälter verzichtet, weil die Vorderseite der Kassette mit ihren Öffnungen nämlich durch einen Schieber verschlossen wird. Vor der Inbetriebnahme einer solchen digital abspielbaren Kassette muß der Schieber aus der geschlossenen Stellung in eine Offenstellung verschoben werden, in der die Öffnungen der Kassette zum Einführen von Tonkopf, Andruckrollen und Tonwellen freiliegen. Der Schieber braucht also nur verfahren zu werden, wenn die Kassette in Betrieb genommen wird. Auch braucht kein Schieber verfahren zu werden, wenn eine analog abspielbare Kassette ohne Schieber verwendet wird. Der Lademechanismus muß also erkennen, ob er einen Schieber öffnen muß oder nicht.

Nach einer weiteren Ausgestaltung der Erfindung ist zu diesem Zweck vorgesehen, daß der Wippbalken mit einem seitlichen Ansatz versehen ist, der über ein Gestänge einen Öffnungsstift an der Vorderseite der Kassette in eine Führungskontur der Kassette einschwenken kann zum Verschieben eines Schiebers, der in seiner Schließlage Öffnungen an der Vorderseite der Magnetbandkassette verschließt, wobei das Gestänge auf einen Hebel einwirkt, der den Öffnungsstift trägt und der über eine der Seitenwände der Kassette schwenkbar ist, wobei er den Öffnungsstift in die Führungskontur einschwenkt. In Weiterbildung einer Ausgestaltung ist vorgesehen, daß der Hebel gabelförmig ausgebildet ist mit zinkenbildenden Armen, die über die Seitenwände der Kassette schwenkbar sind, wobei der Arm den Öffnungsstift trägt und beim Einschwenken in die Führungskontur der einen Seitenwand eingreift und der andere Arm die andere Seitenwand untergreift. Ein Arm trägt den Öffnungsstift und führt ihn beim Einschwenken in die Führungskontur der einen Seitenwand und der andere Arm untergreift die andere Seitenwand.

Der Wippbalken, der bereits erkennt, welcher Kassettentyp in den Schacht des Lademechanismus eingeschoben worden ist, sorgt also dafür, daß der Öffnungsstift beim Einschwenken einer Digitalkassette in eine Position verschwenkt wird, in der er den Schieber festhält, so daß sich die Vorderseite der digital abspielbaren Magnetbandkassette öffnet. Beim Einschieben einer Analogkassette bleibt er dagegen außerhalb der Magnetbandkassette stehen, so daß die analog abspielbare Kassette, die keine Führungskontur für einen Schieber aufweist, unbehelligt vorbeifahren kann.

Damit die Arme der Gabel über die beiden Flachseiten der Kassette schwenken können, ist der Basissteg der Gabel in vertikaler Richtung vor der Kassettenvorderseite schwenkbar gelagert. Der weitere Vorteil der Gabelanordnung besteht darin, daß der eine Arm den Öffnungsstift sicher in der Führungskontur entlangführen kann. Gegen ein Herausspringen aus der Führungskontur ist er gesichert durch den anderen Gabelarm, der die andere Kassettenflachseite übergreift und ein Ausweichen der Magnetbandkassette infolge von Toleranzen nicht zuläßt. Der Öffnungsstift muß also immer in der Führungskontur bleiben, solange die Kassette eingeschoben ist.

Nach einer weiteren Ausgestaltung der Erfindung ist vorgesehen, daß das Gestänge von einer Drahtfeder gebildet ist, mittels der eine Platte, von der der Öffnungsstift und ein zusätzlicher Führungsstift abstehen derart schiebbar ist, daß der Öffnungsstift beim Verschieben in die Führungskontur der Seitenwand einschwenken kann. Dies hat den Vorteil, daß keine Bewegung zwischen Öffnungsstift und Schieber stattfindet, wodurch weniger Verschleiß auftritt.

Die Erfindung bezieht sich weiter auf eine Magnetbandkassette, anwendbar in der Anordnung gemäß der Erfindung mit einem auf zwei koplanaren Spulen gewickelten Magnetband in einem Gehäuse mit zwei planparallelen Hauptwänden, von denen eine mit zwei Antriebsöffnungen versehen ist zum Hindurchlassen zweier Spulenantriebsachsen eines Gerätes, welche Hauptwände durch Querwände miteinander verbunden sind, von denen eine eine Kassettenvorderwand bildet mit einer Zentralöffnung zum Hindurchlassen eines Magnetkopfes und eine Anpreßrollenöffnung zum Hindurchlassen einer Bandanpreßrolle eines Gerätes, wobei diese Kassette mit einem zwischen einer geschlossenen und einer offenen Lage beweglichen Verschluß versehen ist, der in der geschlossenen Lage die Öffnungen bedeckt und in der offenen Lage diese Öffnungen freigibt. In bezug auf die Magnetbandkassette ist die Erfindung dadurch gekennzeichnet, daß die Mitte der Nut in der im wesentlichen geschlossenen Hauptwand sich auf gleicher Entfernung von der Kassettenvorderwand befindet wie die Mitten der Antriebsöffnungen und daß die Nut sich senkrecht zur Kassettenvorderwand erstreckt und sich in der Nähe eines Gehäuserandes in der Hauptwand befindet. Da die Nut auf den gleichen Abstand zur Kassetttenvorderwand wie die Antriebslöcher in der Hauptwand gebracht ist, kann der Mitnehmer kompakt ausgestattet werden und braucht nicht versetzt zu werden, um sowohl mit einer analog abspielbaren wie mit einer digital abspielbaren Kassette zusammenarbeiten zu können.

Die Erfindung wird anhand der Zeichnung näher erläutert. Es zeigen:

Fig. 1a eine Audio-Magnetbandkassette, die analog bespielt und analog abspielbar ist,

Fig. 1b eine Audio-Magnetbandkassette, die digital bespielt und digital abspielbar ist mit einem Schieber, der in der Ruhestellung an der Vorderseite die Kassettenöffnungen verschließt,

Fig. 1c das Vorderteil der Magnetbandkassette nach Fig. 1b mit dem beiseitegeschobenen Schieber, wobei sich der Schieber in der Öffnungsstellung befindet,

Fig. 2a einen Einziehmechanismus für sowohl eine analog als auch eine digital abspielbare Magnetbandkassette mit einem Kassettenschacht in der Stellung, in die die Kassette von Hand herausgezogen oder hereingeschoben werden kann,

Fig. 2b den Einziehmechanismus nach dem Einschieben einer analog abspielbaren Magnetbandkassette, wobei ein Mitnehmer in ein Wickelloch der Magnetbandkassette eingefallen ist, so daß der Mitnehmer die Magnetbandkassette bei weiterem Einziehen mitnehmen kann,

Fig. 2c den Einziehmechanismus nach dem Einschieben einer digital abspielbaren Magnetbandkassette, wobei ein Mitnehmer in eine Vertiefung des Gehäuses der digital abspielbaren Magnetbandkassette eingefallen ist und die Magnetbandkassette beim weiteren Einziehvorgang mitnimmt,

Fig. 3a und 3b zwei schaubildliche Darstellungen von Teilen des Einziehmechanismus nach Fig. 2a bis 2c,

Fig. 4 einen Schwenkhebel, mit dem beim Einschieben der digital abspielbaren Magnetbandkassette, der die Öffnungen ihrer Vorderseite verschließende Schieber beiseite schiebbar ist, in einer Stellung, in der er unwirksam ist,

Fig. 5 den Schwenkhebel in einer Stellung, in der er über das Gehäuse einer digital abspielbaren Kassette geschwenkt ist und den Schieber beiseite geschoben hat,

Fig. 6 ein Gestänge, welches die Detektion des eingeschobenen Magnetbandkassettentyps auf den Schwenkhebel nach Fig. 4 und 5 überträgt, um diesen entweder in die Eingriffsstellung mit einer digital abspielbaren Magnetbandkassette zu schwenken oder ihn aus dem Eingriffsbereich der Magnetbandkassette herauszuschwenken, um das Abspielen einer analog abspielbaren Magentbandkassette zu ermöglichen,

Fig. 7 bis 9 eine andere Ausführungsform des Einziehmechanismus und des Verschiebemechanismus für einen Schieber an der digital abspielbaren Kassette,

Fig. 1O bis 13 Ausgestaltungsformen einer digital abspielbaren Magnetbandkassette und ihres Schiebers.

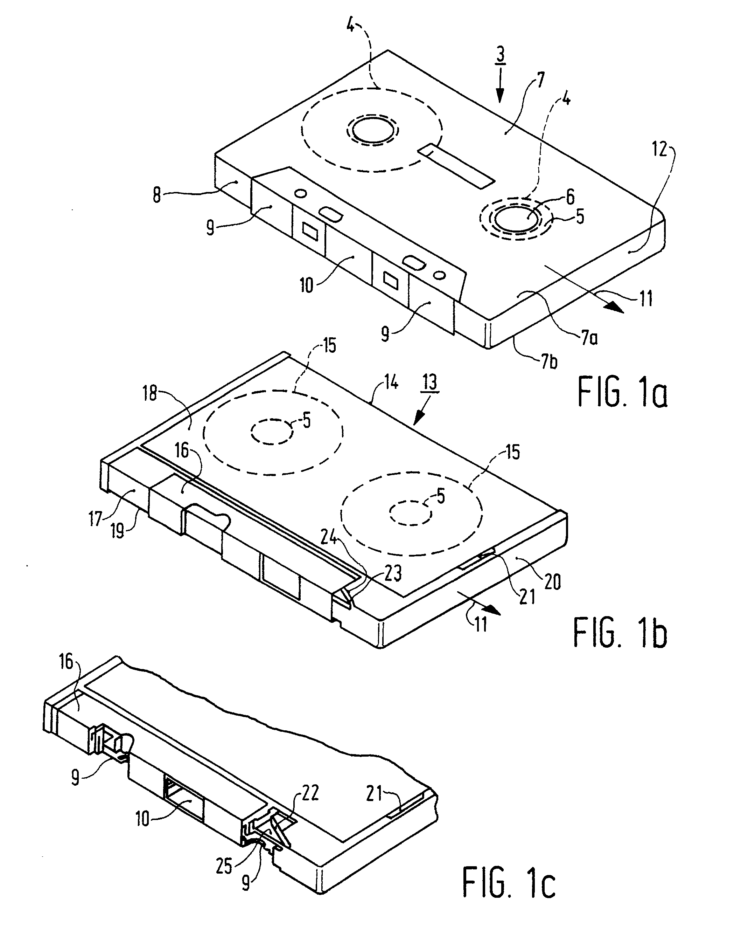

Fig. 1 zeigt eine Magnetbandkassette 3, in der auf strichpunktiert angedeuteten Wickeln 4 ein Magnetband geführt ist. Die Magnetbandwickel 4 sind auf Wickelkerne 5 aufgewickelt, in die durch Wickellöcher 6 des Kassettengehäuses 7 nicht dargestellte Wickeldorne eines Abspielgerätes hindurchgreifen können. An der Vorderseite 8 des mit parallelen oberen (7a) und unteren (7b) Hauptwänden versehenen Gehäuses 7 sind Öffnungen 9 vorgesehen, durch die Andruckrollen des Gerätes gegen das in der Kassette 3 geführte Magnetband von außen einschiebbar sind. Eine weitere Öffnung 10 in der Mitte dient dem Einschieben eines Magnetkopfes. Wird die Magnetbandkassette in einem Gerät mit Lademechanismus verwendet, dann wird sie in Richtung eines Pfeiles 11 mit einer vorn liegenden schmalen Vorderseite 8 in einen Kassettenschacht 28 eingeschoben.

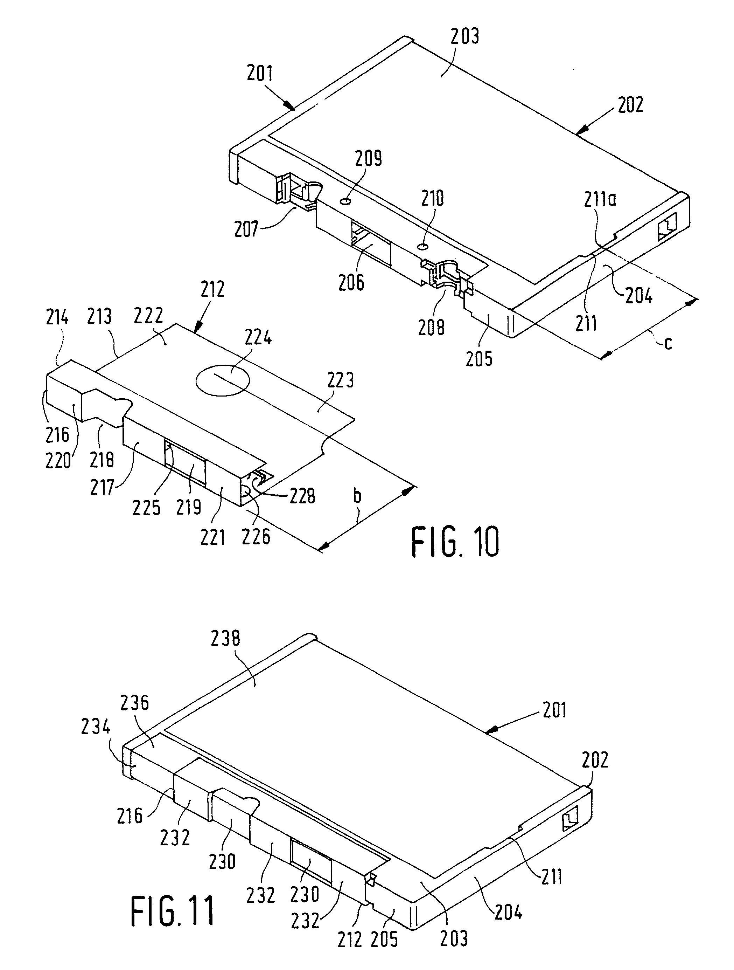

Die analog abspielbare Kassette 3 nach Fig. 11 weist Wickellöcher 6 in beiden Hauptwänden 7a, 7b auf.

In Fig. 1b ist eine digital abspielbare Magnetbandkassette 13 schaubildlich dargestellt, die ein Gehäuse 14 aufweist, in dem sich wieder Magnetbandwickel 15 befinden. Für eine genaue Beschreibung der digitalen Kassette wird bezug genommen auf die nicht vorveröffentlichen NL-Patentanmeldungen Nr. 89 03 088 und Nr. 90 00 348. Die Magnetbandwickel 15 sind auf gestrichelt angedeutete Wickelkerne 5 aufgewickelt. In der Spielposition sitzen die Wickelkerne 5 auf nicht dargestellten Wickeldornen des Gerätes auf. Diese digital abspielbare Kassette 13 hat damit Wickellöcher nur in der unteren Hauptwand 19 der parallelen Hauptwände 18, 19.

Die Magnetbandkassette nach Fig. 1b ist mit einem Schieber 16 versehen, der an der Vorderseite 17 der Kassette Einführöffnungen 9 und 10 für Andruckrollen und Magnetkopf verschließen kann. In der Darstellung nach Fig. 1b befindet sich der Schieber 16 in seiner Schließstellung, in der er die Öffnungen 9 und 10 verschließt. Der Schieber 16 hat eine U-förmige Gestalt und läuft außer vor der Vorderseite 17 auch über eine obere Hauptwand 18 und eine untere Hauptwand 19 der Magnetbandkassette 13.

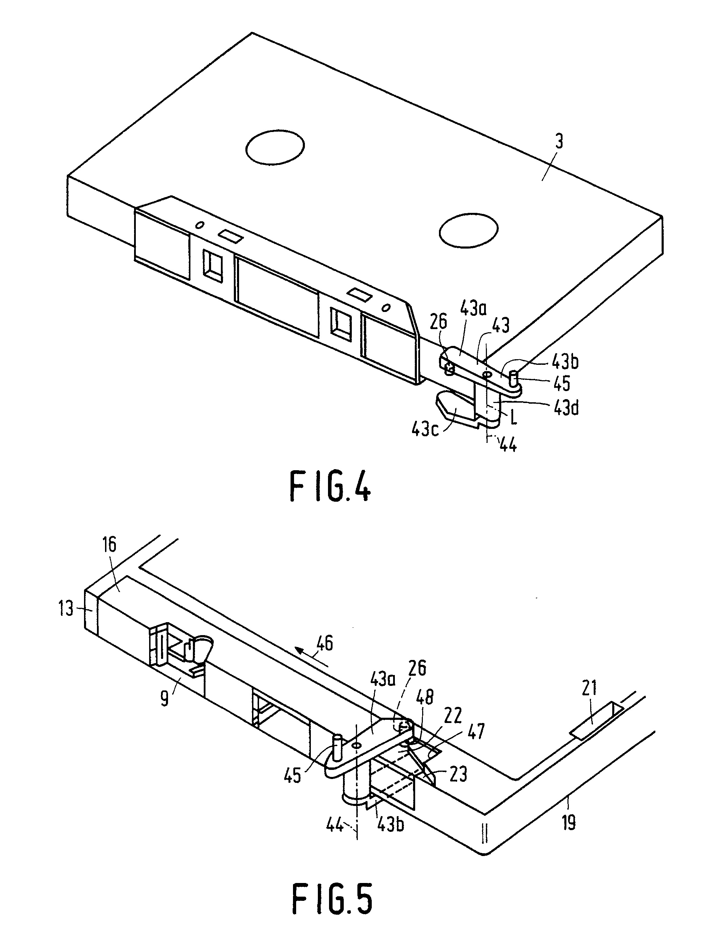

Wie bei der Darstellung nach Fig. 1 wird die Magnetbandkassette 13 zum Abspielen in einem Gerät mit Lademechanismus in Richtung eines Pfeiles 11 mit ihrer vorn liegenden Schmalseite 20 in den Schacht des Gerätes eingeschoben. Nahe der vorn liegenden Schmalseite 20 ist von der oberen Hauptwand 18 her eine Nut 21 in das Kassettengehäuse eingebracht. Im Bereich der Vorderseite 17 und der oberen Seitenwand 18 ist eine Führungskontur 22 vorgesehen. Diese Führungskontur 22 ist in der Schließstellung des Schiebers 16 nach Fig. 1b teilweise verschlossen und es bleibt nur ein Einlaufteil 23 mit einem Teil einer Führungskante 24 frei. Die Führungskante 24 erhebt sich aus einer Führungsfläche 25, auf die ein Öffnungsstift 26 auflaufen kann, der in den Fig. 4 und 5 dargestellt ist.

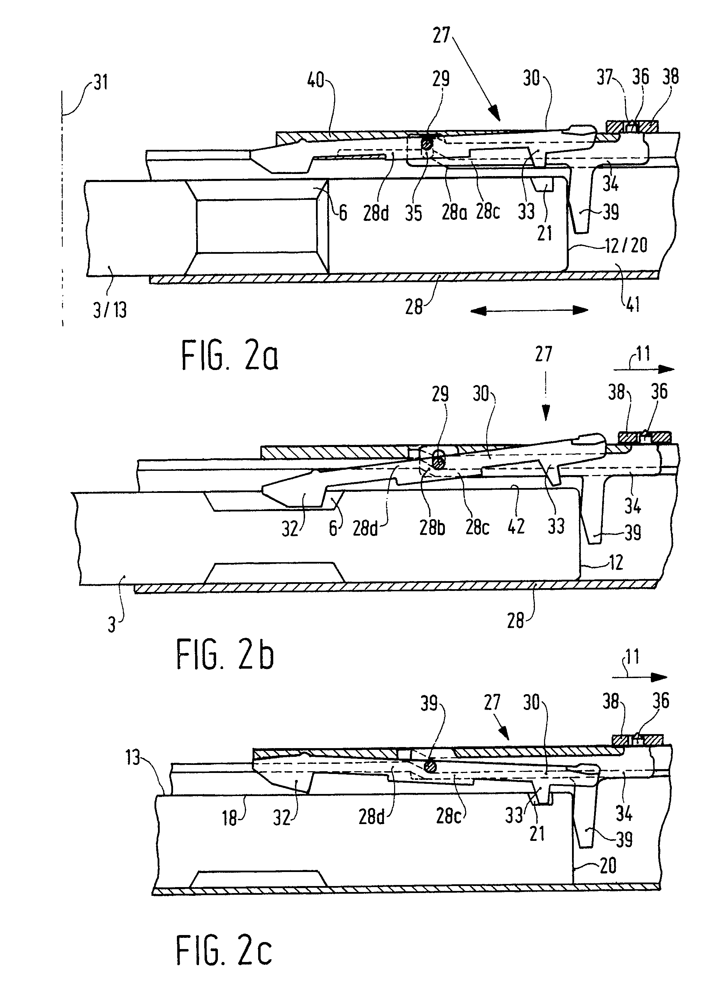

Das dem Abspielen dienende Magnetbandkassettengerät ist mit einem Lademechanismus 27 versehen, der sowohl Magnetbandkassetten des Typs nach Fig. 1a als auch nach Fig. 1b abspielen kann. In Fig. 2a ist dieser Lademechanismus 27 im Schnitt dargestellt mit einer in einen Kassettenschacht 28 eingeschobenen fiktiven Magnetbandkassette, die zum Einziehen beide Kassettentypen dienende Vertiefungen aufweist. Es sind dies für die analog abspielbare Magnetbandkassetteein Wickelloch 4 und für die digital abspielbare Magnetbandkassette die Nut 21 im Bereich der Schmalseite 20. An der Oberseite des Kassettenschachtes 28 ist mittels einer Wippwelle 29 ein Wippbalken 30 gelagert. Der Wippbalken erstreckt sich in Einzugsrichtung der Magnetbandkassetten 3/13 und weist in von der Gerätevorderseite 31 her gesehen, einen Analog-Kassettenmitnehmer 32 und weiter zum Geräteinneren hin einen Digital-Kassettenmitnehmer 33 auf. Durch Wippbewegungen um die Wippwelle 29 kann entweder der Analogmitnehmer 32 oder der Digitalmitnehmer 33 in die jeweils zugeordnete Vertiefung 4 (Wickelloch) oder 21 (Mitnehmernut 21) eingedrückt werden.

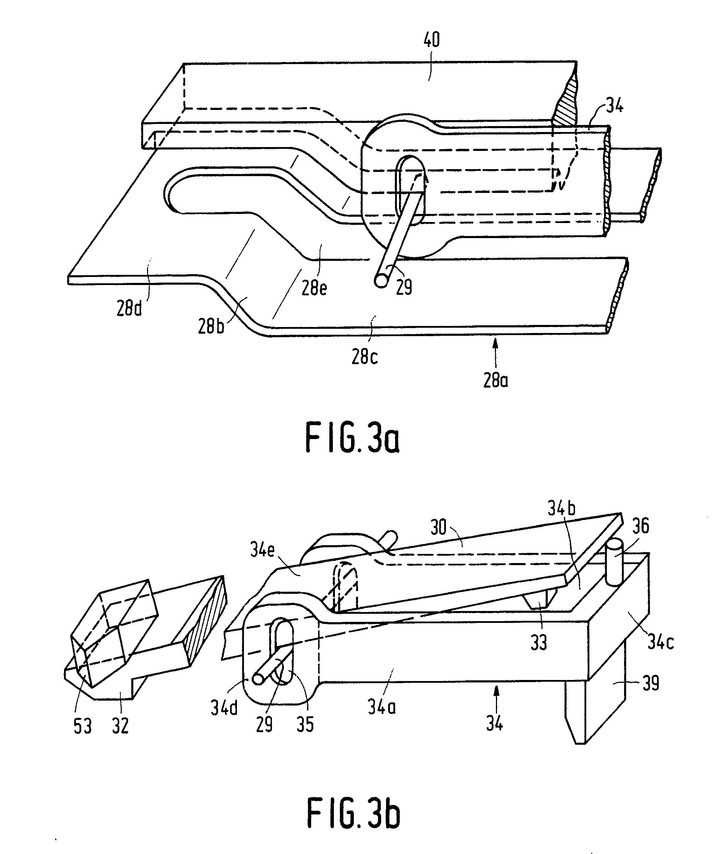

Zur besseren Erläuterung der Funktionsweise des Lademechanismus 27 ist in Fig. 3a die Oberseite 28a des Kassettenschachtes 28 in einem Ausschnitt schaubildlich dargestellt. Man erkennt, daß diese Oberseite 28a eine Rampe 28b aufweist, über die die Schachtwand von einem Teil 28c, in dessen Bereich die Kassette an der Schachtwand 28a anliegt, übergeht in einen von der Kassette weiter abliegenden oder abgehobenen 28 d.

In Einschieberichtung der Kassetten 3/13 erstreckt sich ein Längsschlitz 28e, der über die Rampe 28b hinwegläuft. Über die Oberseite 28a des Kassettenschachtes wird quer zur Einschubrichtung die Wippwelle 29 geführt. Die Führung der Wippwelle übernimmt ein bügelförmiges Zwischenglied 34, das in Fig. 3b schaubildlich dargestellt ist. Dieses Zwischenglied 34 weist zwei Schenkel 34a und 34b auf, die in Einschubrichtung vorn mittels einer Basis 34c verbunden sind. Der Abstand der Schenkel 34a und 34b ist so gewählt, daß das Zwischenglied im Schlitz 28e des Kassettenschachtes längs verschieblich ist. Um dies deutlicher zu machen, ist in Fig. 3a der Schenkel 34b abgebrochen dargestellt. Zur Gerätevorderseite 31 hin enden die Schenkel 34a und 34b in Schenkelköpfen 34d und 34e, in denen sich in vertikaler Richtung Schlitzführungen 35 befinden. In diese Schlitzführungen 35 ist die Wippwelle 29 auf und ab schiebbar. Im Bereich der Basis 34c befindet sich ein Stellstift 36, der in ein Loch 37 eines Einzugshebels 38 des Lademechanismus eingreift. An der Unterseite des Zwischengliedes 34 ist ein Schiebezapfen 39 vorgesehen. Damit das Zwischenglied 34 nicht aus dem Schlitz 28e herausrutschen kann, befindet sich oberhalb der Oberseite 28a des Kassettenschachtes ein Abdeckblech 40.

In der Darstellung nach Fig. 2a hat der Einzugshebel 38 das Zwischenglied 34 soweit in Richtung auf die Vorderwand 31 geschoben, daß die Wippwelle 29 auf den abgehobenen Schachtteil 28d aufgelaufen ist. Damit hat sich der Wippbalken 30 soweit aus dem Kassettenschachtinnenraum 41 herausgehoben, daß beide Kassettentypen 3/13 frei liegen und aus dem Lademechanismus 27 entnommen werden können.

Fig. 2b zeigt nun das Einschieben einer analog abspielbaren Magnetbandkassette 3 in den Kassettenschacht 28. Die vorn liegende Schmalseite 12 der Magnetbandkassette 3 drückt gegen den Schiebezapfen 39 und die Magnetbandkassette 3 nimmt das Zwischenglied 34 in Einzugsrichtung (Pfeil 11) mit. Die Wippwelle 29 läuft dabei über die Rampe 28b herunter auf den an der Kassette anliegenden Schachtteil 28c. Damit kommt der Wippbalken 30 in den Eingriffsbereich der Kassette. Der Digitalmitnehmer 33 kommt in Kontakt mit der oberen Hauptwand 7a der Kassette 3 und drückt den analog Kassettenmitnehmer 32 in das Wickelloch 6. Der Einzugshebel 38 nimmt über den Stellstift 36 das Zwischenglied 34 in Richtung des Pfeiles 11 weiter mit, weil zwischenzeitlich ein nicht dargestellter Motor für den maschinellen Einzug angelaufen ist. Der Analogmitnehmer 32 zieht über das Wickelloch 6 die Magnetbandkassette weiter ein. In Fig. 2c ist der funktionelle Ablauf des Einzugs beim Einziehen der digital abspielbaren Kassette 13 dargestellt. Es wird wieder ausgegangen von der Stellung nach Fig. 2a, bei der das Zwischenglied 34 in Richtung auf die Kassettenvorderwand 31 geschoben hat und die Wippwelle 29 auf dem abgehobenen Schachtteil 28d aufliegt. Wird nun die Digitalkassette 13 eingeschoben, dann schiebt die vornliegende Schmalseite 20 den Schiebezapfen 39 wieder in Einzugsrichtung 11. Die Wippwelle 39 fährt von dem abgehobenen Schachtteil 28d auf das anliegende Schachtteil 28c herunter. Der Wippbalken 30 kommt damit in den Zusammenwirkbereich mit der Kassette 13. Der Analogmitnehmer 32 stößt gegen die obere Hauptwand 18 der Digitalkassette 13 und drückt den Digitalmitnehmer 33 in die Nut 21. Der Einzugshebel 38 wird bei dem zwischenzeitlich angelaufenen Einzugsmotor in Richtung des Pfeiles 11 bewegt. Dabei nimmt er über den Stellstift 36 das Zwischenglied 34 und die Digitalkassette 13 mit. Auf diese Weise gelangt die Digitalkassette in ihre Abspielstellung.

Die Lage der Rampe 28b ist so gewählt, daß die Wippwelle 29 erst dann von dem abgehobenen Schachtteil 28d auf den anliegenden Schachtteil 28c herunterrutschen kann, wenn im Rahmen der Einzugsbewegung die Mitnehmer bereits in die Nähe der Vertiefungen 6 bzw. 21 gelangt sind. Damit ist der Weg längs dessen der jeweilige Mitnehmer über die obere Hauptwand 7a schleift, nur kurz und die eventuelle Ausbildung der Schleifspuren ist auf einen engen Bereich begrenzt.

Durch das Verschwenken des Wippbalkens 30 indiziert dieser, welcher Magnetbandkassettentyp, Analog 3 oder Digital 13 vom Lademechanismus eingezogen wird. Diese Indikation bietet sich an, auch das Beiseitedrücken des Schiebers 16 in die Öffnungsstellung zu veranlassen.

Zur Betätigung des Schiebers 16 wird ein Schwenkhebel 43 eingesetzt, der in Fig. 4 dargestellt ist. Dieser Schwenkhebel 43 ist um eine Achse 44 verschwenkbar. Der zweiarmig ausgebildete Schwenkhebel trägt an einem Arm 43a den Öffnungsstift 26 und an einem rückwärtigen Hebelarm 43c einen Stellstift 45. In Verlängerung des Armes 43a erstreckt sich über die Achse 44 hinaus ein Arm 43c. Die Arme 43a und 43b bilden zusammen mit einem sie verbindenden Abstandteil 43d Gabelzinken, die über die obere Hauptwand l8 und die untere Hauptwand 19 der digital abspielbaren Kassette schwenkbar sind. Beim Abspielen einer analog abspielbaren Kassette würde der Öffnungsstift 26 störend im Wege sein. Deshalb ist der Schwenkhebel 43 bei der Darstellung nach Fig. 4 so verschwenkt, daß die Arme 43a und 43c außerhalb der einzuschiebenden Kassette liegen. Die Analogkassette 3 kann bei dieser Stellung des Schwenkhebels 43 an diesem vorbei in die Spielstellung geführt werden.

Anders ist es bei dem Einschieben einer digital abspielbaren Kassette 13, weil bei ihr der Schieber 16 in Richtung eines Pfeiles 46 weggeschoben werden muß. Der Schwenkhebel 43 wird deshalb mit seinen Armen 43a und 43b um die Achse 44 in die Führungskontur 22 eingeschwenkt.

Die Darstellung nach Fig. 5 ist dabei die Endstellung, in der der Schieber 16 bereits vollständig beiseitegeschoben ist. Das Wegdrücken des Schiebers 16 erfolgt bei allmählich schwenkendem Schwenkhebel 43a und beginnt an dem vorderen Einlaufteil 23. Der Schieber steht in diesem Augenblick noch mit seiner in der Zeichnung rechts gelegenen Kante an einer Anschlagkante 47 der Schieberführung. Der Öffnungsstift 26 fährt nun bei weiter einschiebender Kassette 13 längs der Führungskontur 22 und schiebt den Schieber 16, bis er in der Endstellung nach Fig. 5 hinter eine Arretierungskante 48 fällt. In dieser Stellung ist der Schieber 16 sicher in der Offenstellung blockiert. Bei dem Einschwenken des Schwenkhebels 43 ist der Arm 43a über die Oberseite der Seitenwand 18 geschwenkt und der zweite Arm 43b schwenkte unter die untere Seitenwand 19 der Analogkassette 13. Die Kassette liegt auf diese Weise zwischen den beiden Armen 43a und 43b und dem Stift 26 ist genau vorgegeben, wie tief er in die Führungskontur 22 eingreifen muß. Damit ist sichergestellt, daß der Stift nicht aus der Führungskontur unbeabsichtigt herausausrutschen kann.

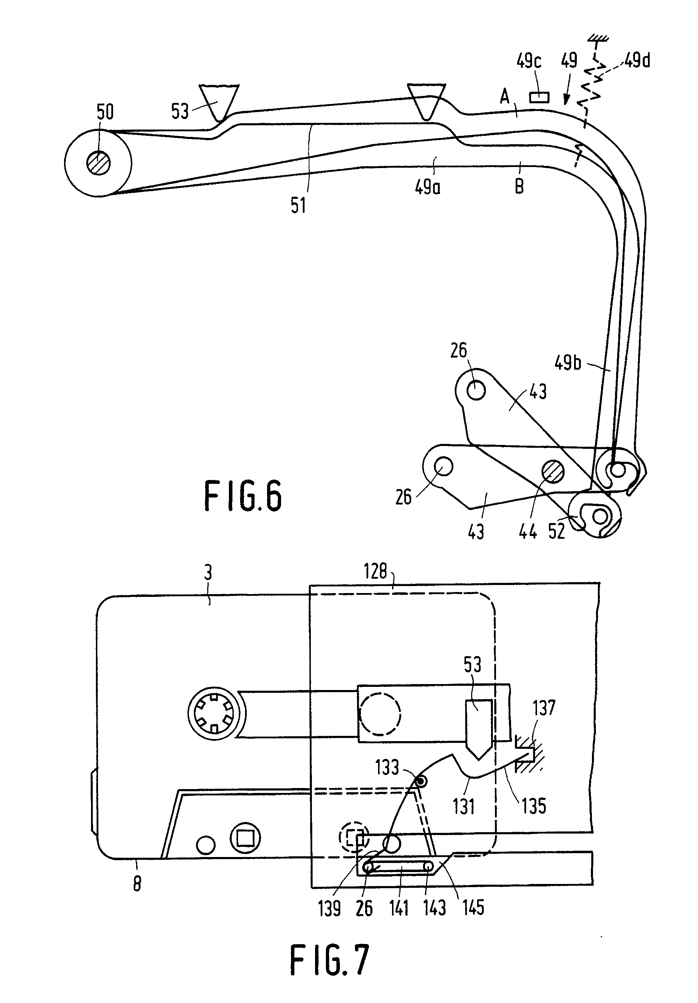

Zum Übertragen der Schwenkbewegung dient ein Gestänge. Dieses Gestänge 49 ist als ein in sich federnder Kunststoffbügel von L-förmiger Gestalt ausgebildet mit Armen 49a und 49b. Das Ende des Armes 49a ist drehbar gelagert um eine Lagerung 58 am Kassettenschacht 28. Außerdem hat der Arm 49a eine Steuerkante 51. Das Ende des Armes 49b greift mit Klauen 52 über den Stellstift 45. An dem Wippbalken 30 ist, wie Fig. 3b deutlich zeigt, oberhalb des Analogmitnehmers 32 ein Ansatz 53 vorgesehen, der in Fig. 6 abgebrochen dargestellt. Steht der Wippbalken 30 beim Einschieben einer Analogkassette 3 mit dem Analogmitnehmer32 abgesenkt in einem Wickelloch 6, dann kann beim Verschieben des Zwischengliedes 34 in Einzugsrichtung nach Pfeil 11 der Ansatz 53 nicht gegen die Steuerkurve 51 stoßen. Der Ansatz liegt dazu zu tief. Deshalb läuft der Ansatz 53 unter dem Arm 49a des Gestänges 49 durch. Zwischen den Armen 49a und 49 besteht eine solche Spannung, daß der Schwenkhebel 43 die Stellung nach Fig. 4 einnimmt, d.h. aus dem Einfahrbereich der Kassette herausgeschoben ist. Das Gestänge 49 liegt dabei an einem Anschlag 49c an. Anstelle einer Verspannung der Arme 49a und 49b kann auch eine Vorspannfeder 49d vorgesehen werden, die das Gestänge 49 entgegen dem Uhrzeigersinn um die Lagerung 50 zu schwenken bestrebt ist. Wird eine digital abspielbare Kassette eingeschoben und der Digitalmitnehmer 33 in die Nut 21 gedrückt, dann kommt der Ansatz 53 hoch und läuft auf die Steuerkante 51 auf. Das bedeutet, daß bei der Vorfahrbewegung der Ansatz 53 den Hebelarm 49 aus der Stellung A für Analogabspiel in die Stellung B für Digitalabspiel drückt. Der Schwenkhebel 53 schwenkt damit im Uhrzeigersinn und der Öffnungsstift 26 gelangt unter Vorspannen der Federung des in sich federnden Gestänges 49 in den Bereich der Führungskontur 22 ein.

Fig. 7 bis 9 zeigen eine andere Ausführungsform eines Lademechanismus für Magnetbandkassetten, die sowohl analog als auch digital abspielbar sind. In den Kassettenschacht 128 ist in Fig. 7 eine analog abspielbare Magnetbandkassette 3 eingeschoben. Ebenso wie bei der Darstellung nach Fig. 6 gibt es einen Ansatz 53, der sich oberhalb einer zweischenkligen Drahtfeder 131 oder im Wirkbereich dieser Drahtfeder 131 befinden kann. Die zweischenklige Drahtfeder 131 ist um eine Achse 133 verschwenkbar und weist von der Achse 133 wegweisende Schenkelenden 135, 137 auf. Ein freies Ende 135 der Drahtfeder 131 greift in eine Ausnehmung 137 des Lademechanismus. Das andere freie Ende 139 der Drahtfeder 131 greift gelenkig um den Stift 26, der bei dieser Ausführungsform an einer Platte 141 befestigt ist. Die Platte 141 trägt noch einen zweiten Leitstift 143. Beide Stifte 26 und 143 weisen bei der Darstellung nach Fig. 7 senkrecht in die Zeichenebene hinein.

Der Kassettenschacht 128 ist mit einer Ausnehmung 145 versehen, in die die Feder 131 die Platte 141 hinein drängt, wenn sie von außen nicht belastet wird.

Beim Einschieben einer analog abspielbaren Kassette läuft der Ansatz 53 über die Feder 131 hinweg und wirkt nicht auf sie ein. Das bedeutet, daß die Feder 131 die Platte 141 in die Ausnehmung 145 eindrückt und die Vorderwand 8 der Magnetbandkassette 3 an der Platte seitlich vorbeilaufen kann.

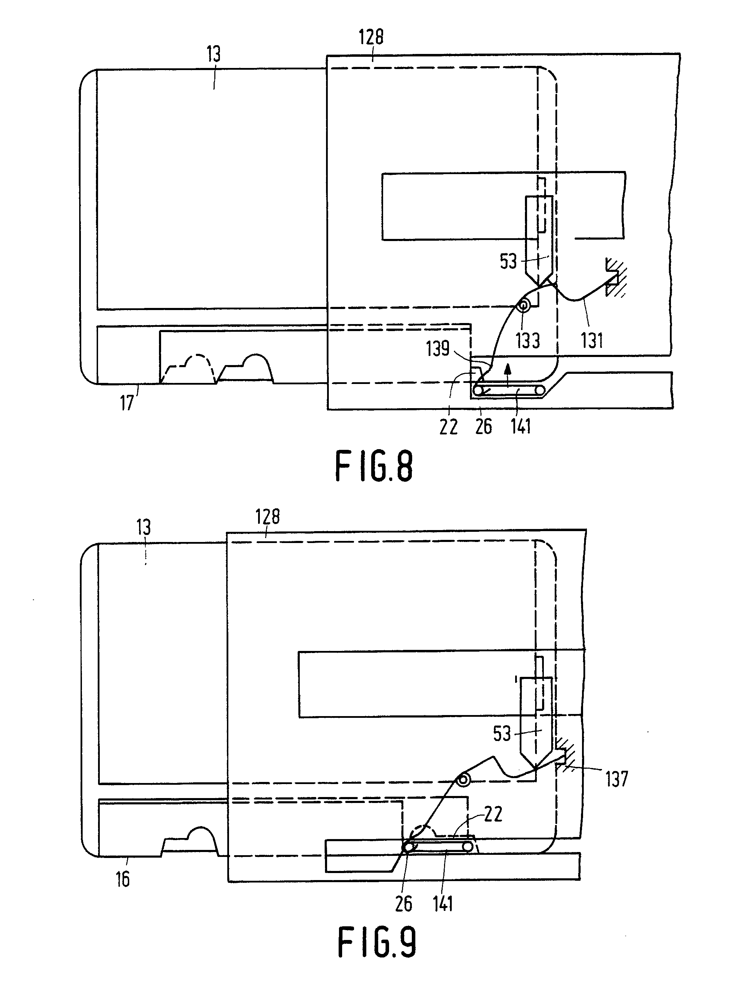

Die Darstellung nach Fig. 8 zeigt den Kassettenschacht 128 zusammen mit einer digital abspielbaren Kassette 13. Wird die digital abspielbare Kassette 13 weiter in den Schacht 128 eingeschoben, dann sinkt der Ansatz 53 entsprechend der Funktionsweise nach Fig. 6 in den Wirbereich der Feder 131 ab. Damit drückt der Ansatz 53 gegen die Feder und belastet diese um ihre Achse 133 im Uhrzeigersinn. Das hat zur Folge, daß das Federende 139 bestrebt ist, die Platte 141 gegen die Kassettenvorderwand 17 zu ziehen.

Fig. 9 zeigt, wie bei weiter eingeschobener Kassette die Führungskontur 22 vor die Platte 141 gelangt ist. Die Platte konnte sich damit in die Führungskontur 22 hinein bewegen.

Beim weiteren Einschieben der Kasette 13 wandert die Platte 141 in die Führungskontur 22 ein. Das hat zur Folge, daß der Führungsstift 26 den Schieber 16 nach links verschoben hat. Damit wurden die Eingriffsöffnungen für Tonkopf und Andruckrolle freigelegt.

Fig. 10 zeigt eine Ausführungsform einer erfindungsgemäßen Kassette. Die Kassettte 201 umfaßt ein Gehäuse mit zwei Hauptwänden 203, die durch Querwände 204 miteinander verbunden sind, von denen eine eine Kassettenvorderwand 205 bildet. In der Kassettenvorderwand 205 befindet sich eine Zentralöffnung 206 und auf beiden Seiten derselben eine Anpreßrollenöffnung 207 und 208, die sich bis in die Hauptwände erstrecken. Die Hauptwände 203 sind mit Durchlaßöffnungen 207, 208 versehen zum Hindurchlassen von Posiitionsstiften eines Gerätes. Wenn sich die Kassette in einem Gerät befindet, dann befinden sich außer den Anpreßrollen auch Tonwellen des Gerätes in den Anpreßrollenöffnungen. Die Kassette umfaßt weiterhin einen Verschluß 212 mit Hauptteilen 213 und 214, die sich über die Hauptwände 203 des Gehäuses 202 erstrecken, sowie eine Verschlußvorderwand 216, die sich an der Kassettenvorderwand 205 entlang erstreckt. Die Verschlußvorderwand 216 weist eine zentrale Frontwand 217 und auf beiden Seiten durch Frontöffnungen 218 und 219 davon getrennt seitliche Frontwände 220 und 221 auf. Ein Hauptteil 213 des Verschlusses 212 hat Abdeckteile 222 und 223 zum in der geschlossenen Lage Abdecken von Antriebsöffnungen in einer Hauptwand der Kassette. Der Hauptteil 213 ist weiterhin mit einer Ausnehmung 224 versehen zum in offener Lage Freigeben einer der Antriebsöffnungen. Zum Freigeben der Positionierungsöffnungen 209 und 210 befinden sich Durchlaßöffnungen 225 und 226 in dem Hauptteil 213. Der Hauptteil 213 ist zum Schluß noch mit abgewinkelten Zungen 228 versehen, die als Führungsteile wirksam sind zum Führen des Verschlusses beim Verschieben.

Fig. 11 zeigt die obenstehend beschriebene Kassette 201 in zusammengebauter Form, wobei der Verschluß 212 sich in der verschlossenen Lage befindet. In dieser Lage befinden sich die Frontöffnungen im Verschluß vor dem geschlossenen Teil 230 der Kassettenvorderwand 205, und der geschlossene Teil 232 der Verschlußvorderwand 216 befindet sich vor den Öffnungen in der Kassettenvorderwand 205. Die Teile 234 und 236 der Kassettenvorderwand 205 bzw. der Hauptwand 203 sind vertieft. In diesen Vertiefungen liegt der Verschluß 212, so daß die Außenseite des Verschlusses 212 sich auf gleicher Höhe mit den nicht vertieften Teilen des Gehäuses 202 befindet. Die Hauptwand 203 ist weiterhin noch mit einer Vertiefung 238 versehen, in der ein Aufkleber angebracht werden kann. Es ist erwünscht, die Abmessungen des Aufklebers möglichst groß zu wählen. Aus diesem Grund ist der Hauptteil 214 des Verschlusses 212 klein gewählt. Der Hauptteil 214 erstreckt sich nicht weiter als bis zur Hälfte des Abstandes b der Kassettenvorderwand 205 von der Mitte der Spulen, wobei dieser Abstand dem Abstand b der Verschlußvorderwand 216 von der Mitte der Ausnehmung 224 in der Hauptwand 213 des Verschlusses entspricht.

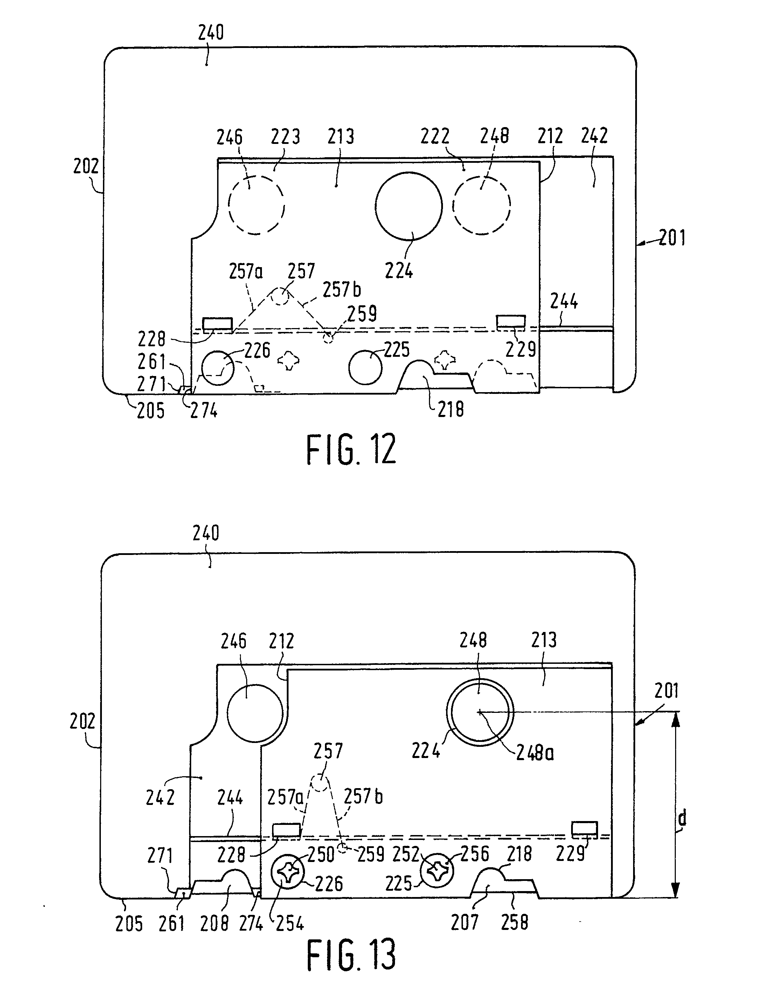

Fig. 12 und 13 zeigen die andere Hauptwand 240 der Kassette 201. Fig. 12 zeigt den Verschluß 212 in der geschlossenen Lage, und Fig. 13 zeigt den Verschluß 212 in der offenen Lage. Der Hauptteil 213 des Verschlusses befindet sich auch in diesem Fall in einem vertieften Teil 242 der Hauptwand 240 des Gehäuses 202. Die Führungsteile 228 und 229 befinden sich in einer Führungsrille 244 in der Hauptwand 240 der Kassette. In der geschlossenen Lage (Fig. 12) werden Antriebsöffnungen 246 und 248 durch die Abdeckteile 222 und 223 abgedeckt, und die Ausnehmung 224 befindet sich ebenso wie die Durchlaßöffnungen 225 und 226 und die Frontöffnungen 218 und 219 vor geschlossenen Teilen des Gehäuses der Kassette. In der offenen Lage (Fig. 13) befindet sich die Ausnehmung 224 vor der Antriebsöffnung 238, und die andere Antriebsöffnung 246 befindet sich neben dem Verschluß 212. Die Durchlaßöffnungen 225 und 226 geben die Positionierungsöffnungen 250 und 252 frei und zugleich Teile 254 und 256 der Hauptwand um die Positionierungsöffnungen herum, wobei diese Teile 254 und 256 als Auflegeflächen wirksam sind, die mit Aufklebeflächen der Positionierungsstifte des Gerätes zusammenarbeiten. Die Frontöffnung 218 in dem Verschluß gibt die Anpreßrollenöffnung 207 in dem Gehäuse frei, und die andere Anpreßrollenöffnung 208 befindet sich in der offenen Lage des Verschlusses neben dem Verschluß, wodurch das Magnetband 258 mit u. a. Bandtransportmitteln eines Gerätes zusammenarbeiten kann. Um zu gewährleistöen, daß der Verschluß 212 in der geschlossenen Lage eine stabile Lage hat, ist die Kassette 201 mit Drängemitteln 257 versehen, die den Verschluß 212 aus der offenen Lage (Fig. 13) in die geshlossene Lage (Fig. 12) zurückdrängen. Diese Drängemittel weisen Federmittel auf, die aus einer Feder 257 mit zwei Federschenkeln 257a und 257b bestehen. Ein Federschenkel 257a drückt gegen das Führungsteil 228 des Verschlusses 228, und der andere Federschenkel 257b ragt durch ein Loch 259 in der Vorderwand 240 und ist dadurch gegenüber dem Gehäuse 202 fixiert.

## Ansprüche

1. Anordnung, bestehend aus einem Magnetbandkassettengerät mit einem Laufwerk und Lademechanismus (27) für Magnetbandkassetten und aus einer Magnetbandkassette (3, 13), die mit Vertiefungen (6) versehen ist, in die jeweils ein Mitnehmer (32) des Lademechanismus (27) zum Handhaben weiterer Lade- und Entladefunktionen eingreifen kann, dadurch gekennzeichnet, daß zum Handhaben von Magnetbandkassettentypen (3, 13) mit unterschiedlichen Bandspielnormen und Gehäusegestaltungen jedem Magnetbandkassettentyp mit seiner speziell ausgebildeten Vertiefung (6, 21) ein spezieller Mitnehmer (32, 33) des Lademechanismus (27) zugeordnet ist.

2. Anordnung nach Anspruch 1, wobei die Magnetbandkassetten (3) eines ersten Typs zwei planparallele Hauptwände (7a, 7b) aufweisen, die je zwei als Wickellöcher ausgestattete Vertiefungen (6) aufweisen, in die jeweils ein erster Mitnehmer (32) des Lademechanismus (27) eingreifen kann, dadurch gekennzeichnet, daß die Magnetbandkassetten mit einer unterschiedlichen Bandspielnorm Magnetbandkassetten (13) eines zweiten Typs mit zwei parallelen Hauptwänden (18, 19) sind, wovon eine Hauptwand im wesentlichen geschlossen und mit einer weiteren, anders gelegenen Vertiefung (21) versehen ist, und daß der Lademechanismus (27) einen zweiten Mitnehmer umfaßt, der in die weitere Vertiefung (21) eingreifen kann.

3. Anordnung nach Anspruch 1 oder 2, dadurch gekennzeichnet, daß ein Mitnehmer (32, 33) für einen Kassettentyp (3, 13), gesteuert von Gehäuseteilen (42, 18) der Kassette (3, 13) dieses einen Typs, mittels eines Mitnehmers (33, 32) für eine Kassette (3, 13) des anderen Typs in die Vertiefung (6, 21) der Kassette dieses einen Typs zum Mitnehmen eindrückbar ist. 4. Anordnung nach Anspruch 3, dadurch gekennzeichnet, daß bei einer Geräteauslegung auf zwei Typen von Magnetbandkassetten (3, 13) die zwei dafür eingesetzten Mitnehmer (32, 33) an den Enden eines sich in Einschubbewegungsrichtung (11) erstreckenden Wippbalkens (30) vorgesehen sind, dessen Wippwelle (29) mittels eines vom Lademechanismus (27) verstellbaren Zwischengliedes (34) verschiebbar ist.

4. Anordnung nach Anspruch 4, dadurch gekennzeichnet, daß das Zwischenglied (34) über die Wippwelle (29) beim Einschieben einer Kassette (3, 13) den Wippbalken (30) mit einzieht und bei deren Ausschieben mit ausschiebt, wobei die Wippwelle (29) beim Ausschieben auf eine Rampe (28b) aufläuft und sich von der Kassette (1, 13) entfernt.

6. Anordnung nach Anspruch 5, dadurch gekennzeichnet, daß die den Wippbalken (30) verschiebende Wippwelle (29) den Wippbalken (30) erst dann in die den Eingriff eines Mitnehmers in die zugehörige Vertiefung (6, 21) erlaubende Stellung absenkt, wenn der Wippbalken (30) diese Stellung nahezu erreicht haben.

7. Anordnung nach Anspruch 4, dadurch gekennzeichnet, daß der in Einschubrichtung hinten gelegene erste Mitnehmer (32) mit einer Vertiefung (6) des ersten Kassettentyps (3) in Form eines Wickelloches und der in Einschubrichtung vorn gelegene zweite Mitnehmer (33) mit einer Vertiefung (21) des zweiten Kassettentyps (13) in Form einer Nut am in Einschubrichtung vorn gelegenen Gehäuserand (20) zusammenwirken.

8. Anordnung nach Anspruch 4, dadurch gekennzeichnet, daß der Wippbalken (30) mit einem seitlichen Ansatz (53) versehen ist, der über ein Gestänge (49) einen Öffnungsstift (26) an der Vorderseite (17) der Kassette (13) in eine Führungskontur (22) der Kassette (13) einschwenken kann zum Verschieben eines Schiebers (16), der in seiner Schließlage Öffnungen (9, 10) an der Vorderseite (17) der Magnetbandkassette (13) verschließt.

9. Anordnung nach Anspruch 8, dadurch gekennzeichnet, daß das Gestänge (49) auf einen Hebel (43) einwirkt, der den Öffnungsstift (26) trägt und der über eine der Seitenwände (18, 19) der Kassette (13) schwenkbar ist, wobei er den Öffnungsstift (26) in die Führungskontur (22) einschwenkt.

10. Anordnung nach Anspruch 9, dadurch gekennzeichnet, daß der Hebel (43) gabelförmig ausgebildet ist mit zinkenbildenden Armen (43a, 43b), die über die Seitenwände (18, 19) der Kassette (13) schwenkbar sind, wobei der Arm (43a) den Öffnungsstift (26) trägt und beim Einschwenken in die Führungskontur (22) der einen Seitenwand (18) eingreift und der andere Arm (43b) die andere Seitenwand (19) untergreift.

11. Anordnung nach Anspruch 8, dadurch gekennzeichnet, daß das Gestänge (49) von einer Drahtfeder (131) gebildet ist, mittels der eine Platte (141), von der der Öffnungsstift (26) und ein zusätzlicher Führungsstift (143) abstehen, derart schiebbar ist, daß der Öffnungsstift (26) beim Verschieben in die Führungskontur (22) der Seitenwand (17) einschwenken kann.

10. Magnetbandkassette zum Gebrauch in einer Anordnung nach einem der vorstehenden Ansprüche.

11. Magnetbandkassette zweiten Typs zum Gebrauch in einer Anordnung nach einem der Ansprüche 1 bis einschließlich 9.

12. Magnetbandkassette nach Anspruch 11 mit einem auf zwei koplanare Spulen (15) gewickelten Magnetband in einem Gehäuse (13) mit zwei planparallelen Hauptwänden (18, 19), von denen eine mit zwei Antriebsöffnungen (6) versehen ist zum Hindurchlassen zweier Spulenantriebsachsen eines Gerätes, welche Hauptwände (18, 19) durch Querwände (14, 17, 20) miteinander verbunden sind, von denen eine eine Kassettenvorderwand (17) bildet mit einer Zentralöffnung (10) zum Hindurchlassen eines Magnetkopfes und eine Anpreßrollenöffnung (9) zum Hindurchlassen einer Bandanpreßrolle eines Gerätes, wobei diese Kassette mit einem zwischen einer geschlossenen und einer offenen Lage beweglichen Verschluß (16) versehen ist, der in der geschlossenen Lage die Öffnungen bedeckt und in der offenen Lage diese Öffnungen freigibt, dadurch gekennzeichnet, daß die Mitte der Nut (21) in der im wesentlichen geschlossenen Hauptwand (18) sich auf gleicher Entfernung von der Kassettenvorderwand (17) befindet wie die Mitten der Antriebsöffnungen (6) und daß die Nut (21) sich senkrecht zur Kassettenvorderwand (17) erstreckt und sich in der Nähe eines Gehäuserandes (20) in der Hauptwand (18) befindet.

FIG. 1a

FIG. 1b

FIG. 1c

FIG. 2a

FIG. 2b

FIG. 2c

FIG.3a

FIG.3b

FIG.4

FIG.5

FIG.6

FIG.7

FIG.8

FIG.9

15

FIG. 10

FIG. 11

FIG. 12

FIG. 13